# EUROPEAN PATENT APPLICATION

(11) **EP 0 726 348 A1**
(43) Date of publication of application: **14.08.1996**
(21) Application number: 95200320.0
(22) Date of filing: 10.02.1995
(51) Int. Cl.: D04H 1/64

(54) **Gas permeable fabric**

(71) Applicant: DU PONT DE NEMOURS INTERNATIONAL S.A., CH-1218 Le Grand-Saconnex (Genève) (CH)
(72) Inventor: Wyss, Kurt Hans, CH-1261 Chavannes-de-Bogis (CH)

(57) **Abstract**

A gas permeable fabric made from a porous substrate that is treated with a composition comprising a fluoropolymer and a rigidizing, film-forming material is disclosed.

## Description

The present invention relates to gas permeable fabrics, more particularly to gas permeable fabrics which are formable into desired shapes and made rigid, and to their use in industrial environments, such as filters.

### Background of the Invention

Shapeable, rigidizable gas permeable fabrics are used in a variety of industrial and environmental applications. Of primary interest is their use as filter media. In certain applications, such filters must be able to withstand continuous exposure to extremely high temperatures (up to 280 °C) without degrading.

In addition, it is desirable that a filter can be formed into a desired shape, and thereafter made rigid and durable. For example, it is often desirable to maximize the surface area of a filter while minimizing the volume of space it occupies. Thus, filters are often pleated into "accordion" type configurations.

Typical filter substrates, though durable and heat resistant, tend to be difficult to mold into and to retain various desired configurations. Thus, in the past, it has been proposed to impregnate filter substrates with various polymers, which lend to the filter substrates the properties of moldability and retention of shape. C.f. US Patent No. 3,918,943, DE 41 37 627 C2, which describe filters made from fiberglass paper that is treated with a polyimide binder, and sheets formed from glass or quartz fibers that are treated with a fluoropolymer.

A disadvantage of the prior art gas permeable fabrics is that the polymer treatment is difficult to distribute uniformly onto the fabric, resulting in spotwise blinding and uneven fabric strengths. In addition, the tongue tear strength tends to be reduced.

### Summary of the Invention

The present invention provides a gas permeable fabric made from a porous substrate that is treated with a composition comprising a fluoropolymer and a rigidizing, film-forming material. More specifically, the present invention provides a gas permeable fabric that is treated with a mixture of a fluoropolymer and a polyamideimide to provide a shapeable, rigidizable substrate which is formed into a desired configuration, and subsequently rigidized, to yield a temperature resistant, durable fabric suitable for various industrial and environmental end-uses.

### Detailed Description of the Preferred Embodiment

As used herein, and unless otherwise noted, the following terms have the meanings indicated below.

End-uses for the fabric of the present invention may be divided into two categories: "high temperature end-uses" refer to those requiring resistance to degradation at temperatures of about 200 °C to 280 °C for extended periods of time, and resistance at temperatures of about 280 °C to 365 °C for periods up to about 10 minutes.

"Moderate temperature end-uses" refer to those requiring resistance to degradation at temperatures of up to about 200 °C for extended periods of time, and resistance at temperatures of about 200 °C to 280 °C for periods up to about 10 minutes.

"Porous substrates" for use in the present invention may be woven or nonwoven, and may be made from a plurality of different fibers. For high temperature end-uses, suitable fibers include meta-aramids, para-aramids, aramid copolymers, polyamideimides, polyoxadiazoles, polyimides, polyetheretherketones, polyetherketoneketones, polybenzimidazoles, polytetrafluorethylenes (PTFE), glasses, ceramics, and blends thereof. Preferred substrates include those made from meta-aramids (e.g. NOMEX), para-aramids (e.g KEVLAR), PTFE (e.g. TEFLON), PTFE-glass blends (e.g. TEFAIRE), all of which are available from the DuPont Company, and polymides (e.g. P-84, available from Lenzing, Austria).

For moderate temperature end-uses, the fabric can be made from fibers such as polyamides, polyacrylonitriles, polyesters, polyphenylensulfides, polyetherimides, viscoses, cottons, modified cellulosics and blends thereof. Preferred fibers for making moderate temperature resistant substrates are polyacrylonitriles, cotton or modified cellulosics.

"Fluoropolymers" are, per se, known in the art, and give the fabrics of the present invention chemical protection and lubricity under end-use operating conditions. For high temperature end-uses, suitable fluoropolymers for use in the present invention are polytetrafluoroethylenes (PTFE) and copolymers of tetrafluoroethylene (TFE) with one or more of 1) a perfluorinated vinyl ether, 2) perfluorinated ethylene-propylene, 3) hexafluoropropylene and 4) vinylidene fluoride; and blends thereof (cf. US Patent No. 4,252,859). Preferred such fluoropolymers are TEFLON (PTFE), TEFLON PFA (a copolymer of TFE and ca. 1.5% perfluoro-propyl-vinyl-ether) and TEFLON FEP (a copolymer of TFE and ca. 10 to 12 % perfluoronated ethylenepropylene), all of which are available from the DuPont Company.

For moderate temperature end-uses, common, commercially available dispersions of fluoropolymer in water are suitable, such as OLEOPHOBOL (Pfersee), ZEPEL (DuPont) and SCOTCHGUARD (3M). A preferred such fluoropolymer is OLEOPHOBOL.

Commonly, the fluoropolymer is provided in the form of an aqueous dispersion, and the water introduced into the composition with the fluoropolymer also serves as a carrier for the composition. However, if desired, organic liquids such as alcohols (e.g. furfuryl alcohol), ketones, aliphatic and aromatic hydrocarbons (e.g. N-methyl pyrrolidone), or mixtures thereof, can be used.

The fluoropolymer is preferably present in the composition for treating the porous substrate in an amount ranging from 1 to 30 % by weight, more preferably 5 to 20 % by weight.

"Rigidizing film forming materials" are known in the art, and, as their name implies, give the fabrics of the present invention dimensional stability, i.e. rigidity. They should be capable of forming a film at or below the fusion temperature of the fluoropolymer used in the present invention. Suitable film forming materials, and methods for making them, are described in US Patent No. 4,087,394. Such film forming materials include acrylic polymers, nitrocellulose, polyamides, polyvinyl chloride and derivatives of epoxy resins (polymeric quaternary hydroxides) blended with nitrogen resins for moderate temperature resistance applications; and polyamide or polyamic acid salts (precursors of polyimides and polyamideimides) for high temperature resistance applications.

Preferred rigidized films in the present invention are polyamideimides (PAI), which are the reaction products of polyamic acid salts, such as trimellitic anhydride, and aromatic diamines such as 4,4'-methylendianiline or bis(4-aminophenyl)methane. Compositions for preparing PAI will, typically, also contain triethylamine, diethylethanolamine, furfuryl alcohol, methylpyrrolidone and water.

The rigidizing film forming materials are preferably present in the composition for treating the porous substrate in an amount ranging from 1 to 30 % by weight, more preferably 3 to 10 % by weight.

"Mica particles, mica particles coated with pigment or metal flake; and blends thereof" are commercially available; they are described in US Patent No. 4,123,401. They may be present in the composition containing the fluoropolymer and film forming agent in amounts up to 10 % by weight, and are preferably present in amounts ranging from 3 to 6 % by weight.

Compositions for treating porous substrates according to the present invention will contain fluoropolymer and film forming material, and optionally may contain other components such as the aforementioned mica-based particles, as well as conventional additives such as antioxidants, flow control agents, surfactants, plasticizers, antistats and the like. These additives will be used in conventional amounts, depending upon the ultimate end-use of the fabric of the present invention.

The compositions can be made by simply mixing together appropriate amounts of the proper components.

The amount of total solids in the composition will be governed by the substrate to which the compositions are to be applied, the method of application, the curing procedures and like factors. In the usual case, the compositions will be formed as aqueous dispersions, containing 1-80% by weight of solids.

The compositions may be applied in any of the usual ways, such as spraying, roller-coating, dipping and doctor-blading.

The compositions are typically applied to the substrate on a dry weight basis at a rate of 3-30 % of the weight of the substrate, according to end-use. The coated substrate is then formed into a desired shape or configuration, e.g. is pleated or convoluted, and the resulting article is baked at a temperature and for a time sufficient to cure the fluoropolymer and the film forming material of the composition. Alternatively, the baking and shaping steps may be reversed.

Unless otherwise indicated, all percentages given are on a weight basis.

### Example 1 - Hot Gas Filtration

As porous substrate, a commercially available 500 g/m² needle felt of NOMEX aramid fiber (available from the DuPont Company) is cut into strips having dimensions of 800 mm x 500 mm. Two grades of felt are used: quality (A) is loom state needled (referred to below as substrate "A"); quality (B) is singed (open flame treatment at 40 m/minute) and calandered (215 °C/10kg/cm) (referred to below as substrate "B").

As treatment compositions, dispersions set forth in Table 1 are formed according to the procedures prescribed in US Patent No. 4,087,394.

**Table 1**

| Compositions | |
|---|---|
| I) | PAI solution* [18.7 % solids], |
| II) | PAI solution*/TEFLON FEP [23% solids (7.7%/15.3%) aqueous dispersion], |
| III) | PAI solution*/TEFLON FEP/Mica [25.5% solids (7%/14%/4.6%) aqueous dispersion] |

| | |
|---|---|
| * a blend of polyamic acid (prepared from trimellitic anhydride and 4,4'-methylendianiline), water, furfuryl alcohol and n-methyl pyrrolidone. | |

The needle felt porous substrate samples are impregnated with compositions I, II and III on a BENZ laboratory padder with a pick-up between 150 and 250 % (based on weight of dried sample), dried on a mini-tenter frame (BENZ) at 200 °C for 3 minutes, followed by baking for 3 minutes at 300 °C. Half of the samples treated with composition I) are not baked as they do not contain fluoropolymer which provides high chemical protection and lubricity. Application rates are given in Table 2, wherein "owf" stands for "on weight fabric" (dry basis).

**Table 2**

| Application Rates | | | |
|---|---|---|---|
| g/l of Composition | pick up | substrate | final amount on felt |
| 140 g/l of I | 155 % | B | 2.5 % owf (2.5 PAI) |
| 150 g/l of II | 192 % | B | 6.8 % owf (2.3 PAI) |
| 300 g/l of III | 145 % | B | 10.8 % owf ( 3 PAI) |
| 140 g/l of I | 235 % | A | 6 % owf ( 6 PAI) |
| 500 g/l of I | 244 % | A | 23 % owf (23 PAI) |
| 300 g/l of II | 168 % | A | 11.7% owf (3.9 PAI) |
| 300 g/l of III | 169 % | A | 20% owf (5.4 PAI) |

The substrates obtained from the previous step are then pleated on conventional equipment at temperatures between 200 °C and 250 °C. for periods ranging between 30 and 60 seconds under hand pressure. All samples prepared are pleatable at all test temperatures, although at lower temperatures the pleating time is longer.

Each of compositions I, II and III provide a rigidized needle felt structure with adequate air permeability. However, composition I leads to a decrease in tongue tear strength (as measured according to DIN 53849/4) of the needle felt as compared with untreated needle felt, whereas treatment with compositions II and III maintain or improve tongue tear strength.

## Claims

1. A gas permeable fabric comprising a porous substrate treated with a composition comprising a fluoropolymer and a rigidizing film forming material.

2. A gas permeable fabric according to claim 1, wherein the film forming material is a polyamideimide.

3. A gas permeable fabric according to claim 1 or 2, wherein the composition further comprises mica particles, mica particles coated with pigment or metal flake; and blends thereof.

4. A gas permeable fabric according to any one of claims 1 to 3 wherein the fluoropolymer is a polytetrafluoroethylene or a copolymer of tetrafluoroethylene with one or more of 1) a perfluorinated vinyl ether, 2) perfluoronated ethylenepropylene, 3) hexafluoropropylene and 4) vinylidene fluoride; and blends thereof.

5. A gas permeable fabric according to any one of claims 1 to 4 wherein the fabric is made from fibers selected from a meta-aramid, a para-aramid, an aramid copolymer, a polyamideimide, a polyoxadiazole, a polyimide, a polyetheretherketone, a polyetherketoneketone, a polybenzimidazole, a polytetrafluorethylene, a glass, a ceramic, and blends thereof.

6. A gas permeable fabric according to claim 1 or 2 wherein the fabric is made from fibers selected from a polyamide, a polyacrylonitrile, a polyester, a polyphenylensulfide, a polyetherimide, a viscose, a cotton or a modified cellulosic, and blends thereof.

7. A gas permeable fabric according to claim 6 wherein the fluoropolymer is dispersed in water.

8. A gas permeable fabric according to any one of the preceding claims wherein the fabric is formed into a desired shape.

9. A gas permeable fabric according to claim 8, wherein the fabric is a filter.

10. A method of making a gas permeable fabric according to any one of the preceding claims comprising applying a composition containing a fluoropolymer and a film forming material to a porous substrate, forming the substrate into a desired shape, and curing the composition.
